Europäisches Patentamt

European Patent Office

Office européen des brevets

(11) Publication number: **0 439 026 A2**

# EUROPEAN PATENT APPLICATION

(21) Application number: 91100269.9

(22) Date of filing: 10.01.91

(51) Int. Cl.5: **C09D 5/02**, C09K 3/30

(30) Priority: 10.01.90 US 462824

(43) Date of publication of application:
31.07.91 Bulletin 91/31

(84) Designated Contracting States:
AT BE CH DE DK ES FR GB GR IT LI LU NL SE

(71) Applicant: FOX VALLEY SYSTEMS, INC.
640 Industrial Drive
Cary, Illinois 60013-1948(US)

(72) Inventor: Smrt, Thomas J.
10014 South Grant Highway, Marengo
Illinois 60152(US)
Inventor: Mierzwinski, Walter S.
1641 Churchill Road, Schaumburg
Illinois 60195(US)

(74) Representative: Dost, Wolfgang,
Dr.rer.nat.,Dipl.-Chem. et al
Patent- & Rechtsanwälte Bardehle .
Pagenberg . Dost . Altenburg . Frohwitter .
Geissler & Partner Galileiplatz 1 Postfach 86
06 20
W-8000 München 86(DE)

(54) Non-flammable aerosol paint composition.

(57) An aerosol composition adapted for providing a continuous film on a substrate upon discharge from a suitable containment means, said composition comprising (a) about 10 to about 30 wt. percent of at least one propellant, (b) about 20 to about 80 wt. percent of water, (c) about 2 to about 25 wt. percent of a water-insoluble film-forming polymer, and (d) about 0.1 to about 10 wt. percent of at least one surfactant, said composition being substantially non- flammable upon discharge from the containment means.

EP 0 439 026 A2

Xerox Copy Centre

# NON-FLAMMABLE AEROSOL PAINT COMPOSITION

## FIELD OF THE INVENTION

This invention relates generally to aqueous-based aerosol paint formulations and, more specifically, to those which exhibit favorable characteristics in the area of non-flammability.

## BACKGROUND OF THE INVENTION

Prior to the discovery of the present invention, there have been innumerable aerosol compositions proposed for providing a continuous, uninterrupted polymer-based film or coating for decorative or protective purposes. These compositions may be conveniently divided into organic solvent-based and aqueous-based compositions.

The organic solvent-based coatings, as the name implies, employ organic solvents as the evaporative vehicle, often in amounts in excess of 60 wt. percent of the total composition. However, these types of compositions allow noxious fumes into the atmosphere during drying, are relatively high in cost, and are quite flammable. For these reasons, many have turned their attention toward developing aerosol compositions in which water is substituted for at least part of the aforesaid solvents.

One example of these at least partially water-based aerosols is given in three related patents, U.S. Patent Nos. 4,362,838, 4,363,887, and 4,365,028 to Leep, et al. These references are directed toward water-in-oil emulsion coating compositions wherein water is dispersed in a continuous phase comprising an organic solvent soluble resin and a solvent, said continuous phase being limited to that which will allow the production of a high gloss coating from the compositions. Although these compositions include water, their water-in-oil emulsions possess organic solvents as their continuous phase. This, however, promotes the flammability of these compositions.

Another approach is found in two other related patents, U.S. Patent Nos. 4,439,342 and 4,439,343 to Albanese. These references disclose aerosol compositions, which are initially non-emulsified, that are suitable for forming a continuous unbroken film. These compositions comprise generally immiscible phases, one of which is a water phase and the other a continuous phase containing an insoluble polymeric, e.g., acrylic, material. Most critically, there is provided in the continuous phase a particular amount of a dispersal agent, a cocodiethanolamide. When the preparation is to be dispensed, the composition is agitated, and an emulsion is developed which allows the dispensed composition to form a continuous, unbroken film layer. Without this agent, the composition is in a non-emulsified state. As in the previous references, these references also disclose the use of an organic-based continuous phase which does not overcome the undesirable properties of the solvent-based aerosols.

An alternative type of emulsion which is superior to those discussed previously is an oil-in-water emulsion. In this type of system, the continuous phase is aqueous in character, thereby resulting in a greater amount of water being present. Accordingly, the flammability and toxicity of these types of systems are reduced significantly. However, this type of emulsion has its own disadvantages when used in an aerosol composition. For example, most of these emulsions will only aerosolize properly if a water-miscible propellant, e.g. dimethyl ether, is employed. Dimethyl ether has a greater flammability than other hydrocarbons and, further, the cost of the ethers is much greater on a per unit basis. In addition, more dimethyl ether is required to reach a given aerosol can pressure when compared with other hydrocarbons.

One example of a composition that utilizes only dimethyl ether as a propellant is contained in U.S. Patent No. 4,384,661 to Page, et al. This reference is directed toward aerosol water-based paint compositions which comprise a film forming polymer emulsified in an aqueous solution of dimethyl ether, said emulsification being carried out by use of a non-ionic surfactant. The aqueous phase of the emulsion is the continuous phase, thus making this emulsion an oil-in-water emulsion. No other type of propellant is contemplated.

In contrast to the previous reference, other references disclose formulated compositions which utilize hydrocarbons other than the ethers as a propellant in substantially aqueous aerosol compositions. As an example, U.S. Patent No. 3,998,775 to Taub is directed toward surfactant-containing aerosol latex paints which are provided by emulsifying a latex paint, which itself is an emulsion of a water-insoluble polymer resin and water, in a liquid propellant containing an imidazole surfactant which purportedly assists in the emulsification. The propellants contemplated by the reference include hydrocarbon propellants generally, although the reference recognizes these as being for the most part flammable. Because of this characteristic, the use of a hydrocarbon propellant in conjunction with halogenated hydrocarbon propellants is preferred, with the use of halogenated hydrocarbons alone being most preferable. The content of the propellant component in the entire system is from 30 to 70 percent by weight. This reference does not make any direct reference to the flammability of this composition.

U.S. Patent No. 4,265,797 to Suk discloses an aerosol paint composition which is purportedly non-flammable. The aerosol paint composition which is disclosed as being capable of providing a high gloss pigmented finish, comprises a propellant, a water-based concentrate which essentially contains water, a film-forming acrylic polymer, and a lower monohydric alcohol, the alcohol component being present in an amount ranging from about 15 to about 35 wt. percent. Upon reproducing Example 2 of this reference, however, it was found that this composition, which included 25 wt. percent of isopropyl alcohol (18%) and 25 wt. percent of dimethyl ether, was flammable when discharged in close proximity to an open flame. This example was replicated a second time except that a mixture of propane and butane was substituted as the propellant in place of dimethyl ether. Upon discharge, this composition failed to atomize. In addition, the material that was discharged did not produce a continuous film. More specifically, it foamed and subsequently cratered and crawled. Most significantly, however, this composition was also found to be flammable upon discharge.

The test for flammability used to analyze the compositions disclosed in U.S. Patent No. 4,265,797 as well as the present invention is the "Flame Projection Test." This test was originally developed by American Association of Railroads, Explosives Division, the United States Department of Agriculture, and the Aerosol Division of the CSMA. This test, which is well known to those of ordinary skill in the art, may be found in the CSMA "Aerosol Guide" (7th ed. April, 1981) at page 14 as well as in "The Aerosol Handbook" (2nd Ed.) by M.A. Johnson at pages 211-212, these publications being incorporated in their entirety herein by reference. Generally, the test contemplates that an aerosol dispenser which is filled with the composition to be tested be shaken and then positioned upright, unless the label states otherwise. The dispenser is subsequently placed six inches from a flame source in a draft-free area. The actual test is run for four seconds, i.e., the dispenser is discharge in the direction of the flame for four seconds. During discharge, the composition should be sprayed through the top one-third of the flame.

In assessing the results, page 18 of the CSMA Aerosol Guide deems a composition to be "Flammable" when the aerosol, during the "Flame Projection Test," produces a flame exceeding eighteen inches in length or produces a "flashback" which touches the actuator on the dispenser. A composition is considered to be "Extremely Flammable" by the CSMA when a "flashback" touching the actuator is produced during the aforementioned test and which has a flash point of less than 20 degrees Fahrenheit according to the "Tag Open-Cup Flash Point Test" of the CSMA.

In many applications it is desirable to provide an aqueous-based aerosol paint which is fluorescent, for example, in striping athletic fields and parking lots that will be used during the early evening or night hours. It should be noted that the term "fluorescent" does not have the meaning traditionally associated therewith, i.e. "glow-in-the-dark" or phosphorescence. These fluorescent paints offer instead a heightened degree of reflectivity, and hence visibility, when compared to standard non-fluorescent paint formulations. The pigments that are used to obtain this fluorescence are not pigments in the truest sense. These "pigments" are actually particles of resin material which have a dye encapsulated within. Generally, two types of resins are utilized for the production of these fluorescent coatings, thermoset and thermoplastic resins. While thermoplastic resins have a great cost advantage over their counterparts, they are very sensitive to the presence of certain organic solvents. Specifically, these resins will decompose if they are exposed to these solvents. Thermoset resins have an advantage over their thermoplastic counterparts in this area in that they are able to withstand the presence of many different types of solvents.

An additional disadvantage which is associated with aerosol aqueous-based paints and coatings is their tendency to cause "flash corrosion" or rusting of metals onto which the paint is applied. It is often the case that overspray, which is due to the aerosol application of these aqueous paints, will inadvertently coat corrosion prone metals in the proximity of the object being sprayed. When this occurs, water from the paint is trapped close to the metal surface for an extended period of time. The result of this contact is a phenomenon known as "flash corrosion" or "flash rusting" wherein actual corrosion of the metal occurs. This phenomenon is an undesirable occurrence which is associated with the use of aqueous-based aerosol paints and coatings.

Thus, there exists a need for non-flammable aerosol paint compositions which do not suffer from the disadvantages associated with prior aerosol paint compositions.

Accordingly, it is an object of the present invention to provide an aqueous-based aerosol paint formulation which is substantially non-flammable when discharged from a pressurized container.

A further object is to provide an aerosol paint formulation which results in the production of a substantially smooth film after the applied formulation has dried.

Yet another object is to provide an aerosol paint formulation in which either thermoplastic fluorescent pigments, thermoset fluorescent pigments, or a combination of both, may be used.

An additional object is to provide an aerosol paint formulation which can be applied onto a metal surface without causing the surface to corrode or rust.

These and other objects and advantages of the present invention will become apparent upon review of the following summary and detailed description of the invention.

## SUMMARY OF THE INVENTION

In accordance with the foregoing objectives, the present invention provides an aerosol composition adapted for providing a continuous film on a substrate upon discharge from a suitable containment means, said composition comprising (a) about 10 to about 30 wt. percent of at least one propellant, (b) about 20 to about 80 wt. percent of water, (c) about 2 to about 25 wt. percent of a water-insoluble film-forming polymer, and (d) about 0.1 to about 10 wt. percent of at least one surfactant, said composition being substantially non-flammable upon discharge from the containment means.

## DETAILED DESCRIPTION OF THE INVENTION

While the invention will be described in connection with certain preferred embodiments, it is not intended to be so limited. On the contrary, it is intended to cover all alternatives, modifications, and equivalent arrangements as may be included within the spirit and scope of the invention as defined by the appended claims.

The present invention contemplates an aerosol composition adapted for providing a continuous film on a substrate upon discharge from a suitable containment means, said composition comprising (a) about 10 to about 30 wt. percent of at least one propellant, (b) about 20 to about 80 wt. percent of water, (c) about 2 to about 25 wt. percent of a water-insoluble film-forming polymer, and (d) about 0.1 to about 10 wt. percent of at least one surfactant, said composition being substantially non-flammable upon discharge from the containment means.

Turning initially to the propellant, the present invention contemplates the use of any type of propellant or mixture of propellants that will aerosolize the film-forming composition. Typically, liquid propellants are used to provide such aerosolization. By using the term "liquid propellant," it is contemplated that such propellant is gaseous at room temperature and atmospheric pressure but liquid under pressure contained within an aerosol can.

It is not critical to the invention whether a water-miscible or water-immiscible propellant is used so long as the composition emerges from the containment means as an aerosol. In addition, the propellant selected should also be inert, i.e., it should not react with the components of the composition. One example of a water-miscible propellant is dimethyl ether. The ethers may be used in the present inventive compositions with some degree of success and, as such, are claimed herein. However, they are not favored due to their previously noted disadvantages, i.e., relatively high flammability and cost in comparison to other available propellants. Water-immiscible propellants contemplated by the invention include non-halogenated hydrocarbons other than the ethers, e.g., methane, ethane, propane, butane, isobutane, and halogenated hydrocarbons, e.g., Freon 12, as well as mixtures of these various water-immiscible propellants. Use of the halogenated hydrocarbons is presently on the decline, however, due to environmental concerns over their effect on the ozone layer surrounding the earth. As such, use of these types of propellants is not preferred.

The quantity of propellant utilized will vary based upon the specific aerosol composition formulated. The proportions of the ingredients in the aerosol should be taken into account as well as the flammability of the resulting composition. Generally, the amount of such components, including the propellant, is limited such that the composition is non-flammable. Thus, the amount of propellant present should generally be that which is sufficient to expel substantially all of the components from the containment means without rendering the composition flammable. The sufficiency of propellant in an aerosol is typically determined by reference to the vapor pressure inside the can. Generally, when the pressure in the can reaches a range of from about 30 to 85 psig at 70 degrees Fahrenheit, a sufficient amount of propellant has been introduced. Preferably, the pressure ranges from about 40 to 80 psig.

In order to reach the aforesaid pressures, the propellant is generally present in an amount ranging from about 10 to about 30 wt. percent of the composition. Preferably, about 15 to about 25 wt. percent of propellant will be in the composition and most preferably about 18 to 22 wt. percent. However, if dimethyl ether is used, amounts at the higher end of the range will be necessary due to its characteristic lowering of vapor pressure upon exposure to solvents. This increase must be carefully monitored as the flammability of this propellant is high in relation to other hydrocarbons and halogenated hydrocarbons. Most hydrocarbons and halogenated hydrocarbons do not suffer from this loss of vapor pressure effect and may therefore be present in a lesser amount. Further, the other propellants are typically less expensive than dimethyl ether and are significantly less flammable, making these two classes of propellants, and most advantageously hydrocarbons other than the ethers, the preferred propellants.

One of the intended uses of the aerosol compositions of the present invention is as an athletic field or parking lot marking paint. As such, the composition will be pressurized in a suitable containment means, e.g., an aerosol can, and placed in a striping machine in what would normally be termed an inverted position to await discharge. This position is contrary to the position which most consumers are familiar with wherein the actuator is located generally upward and the paint or other coating is applied with the can in this upward position. Turning the can in an inverted position would not result in paint being expelled, but only propellant, this serving to clear the actuator of any potentially clogging paint residue.

In contrast, and as alluded to earlier, the present invention may be discharged from the can while the can is inverted. In this situation, the paint or coating will be discharged downwardly such that when the striping machine is propelled a stripe is formed. When the spraying is completed, the can is placed in an upright position to clear the actuator of potentially clogging paint residue. Therefore, the present invention is adapted to be substantially non-flammable in accordance with the aforesaid "Flame Propagation Test."

The film-forming component utilized in the present invention may be generally described as a polymer, preferably a water-insoluble polymer. Acrylic polymers are particularly appropriate for use herein. One preferred group of polymers contemplated by this invention consists of interpolymers of (i) units from at least one neutral free-radical polymerizable ester having a vinylidene group attached to the functional group, which ester by itself yields a soft linear polymer, for example an acrylic, (ii) units from at least one neutral polymerizable aromatic monovinylidene compound which by itself yields a hard polymer, such as styrene, and (iii) units from at least one neutral polymerizable aliphatic monovinylidene compound substituted by a cyano group and which by itself yields a hard polymer, for example, acrylonitrile. Exemplary of polymers of this type, in aqueous dispersion form, are available from Rohm & Haas, Inc. under the designation "W.L.", for example "W.L. 91." This W.L. dispersion consists of a copolymer of styrene, acrylonitrile, and an acrylate ester present in an amount ranging from about 40 to about 43 wt. percent and a surfactant present in an amount ranging from about 4 to about 6 wt. percent of the dispersion, the balance being water. These type of polymers, i.e., the W.L. series, generally have a molecular weight of about one million.

The Rohm & Haas W.L. polymers described above are particularly preferred because they exhibit an excellent tolerance toward alcohols and other organic components that may be incorporated into an aerosol composition. As such, in addition to these specific polymers, any polymer that exhibits similar characteristics is also preferred. Such preferred polymers can be generally identified by determining whether the polymer remains in a non-coalesced condition during the time the polymer resides in the containment means despite there being present an amount of solvent in excess of the minimum amount required to form a smooth and continuous polymer film.

The amount of polymer included in the composition is that amount which is sufficient to form a continuous film upon discharge from the containment means. Generally, the amount of polymer solids present in the composition which is adequate to accomplish the foregoing ranges from about 2 to about 25 wt. percent of the total aerosol composition, preferably about 2 wt. to about 15 wt. percent, and most preferably about 3 to about 8 wt. percent of the aerosol composition.

The water component of the present invention is generally present in an amount sufficient to allow adequate dispersion of the components as well as assist in rendering the composition substantially non-flammable. This amount generally ranges from about 20 to about 80 wt. percent, preferably from about 30 to about 60 wt. percent, and most preferably about 35 to about 45 wt. percent of the composition. A composition that is comprised of at least about 35 wt. percent water is preferred from a flammability standpoint.

The surfactant used in the present invention may be of any type which is suitable for providing adequate dispersion of the resin component throughout the composition. If the polymers selected are those which are already in the form of an aqueous dispersion, e.g., the Rohm and Haas W.L. series, the amount of surfactant associated with the polymer resin is generally sufficient. However, as additional components are added, such as pigments, it may be desirable to introduce additional amounts of surfactants as dispersants into the composition. Surfactants acting as e.g., wetting agents, defoamers, and leveling agents, may also be added depending upon the characteristic desired in the composition and the final film. Generally, the amount of surfactants included in the composition will be that required to promote the desired characteristic, but not an amount which will cause excessive settling or excessive foaming. Exemplary of a preferred surfactant is Triton CF-10, an alkylaryl polyether. The amount of surfactant present generally ranges from about 0.1 to about 10 wt. percent, preferably about 0.5 to about 5 wt. percent, and most preferably about 1 to about 3 wt. percent of the solution.

Alcohols may also be present in the composition. This component serves to assist in the evaporation of liquids after the composition has been discharged from the containment means. However, the addition of alcohol to the composition also serves to increase its flammability. Therefore, if an alcohol is employed, its presence should be limited to an amount such that the composition as a whole is non-flammable upon discharge from the containment means. Although any type of alcohol may be used, the lower alcohols, i.e., alcohols that have one to four carbon atoms in their structure, are preferred. Examples of these preferred alcohols include methanol, ethanol, propanol, butanol, and mixtures thereof. These alcohols may generally be present in an amount generally ranging from about 1 to about 10 wt. percent, preferably from about 3.5 to about 8 wt. percent, and most preferably about 5 to about 6 wt. percent of the composition.

One or more coalescing solvents may also be utilized in the present composition, these components assisting in the formation of the film after discharge. Any suitable solvent may be used, with those which evaporate relatively slowly being preferred. Examples of these solvents, which may be used alone or in combination, include lower monoalkyl ethers of ethylene or propylene glycol, such as propylene glycol methyl ether and ethylene glycol butyl ether. Generally, coalescing solvents are present in an amount that is sufficient to provide the preferred formation of a continuous polymer film. The specific amount used in the present invention will typically range from about 1 wt. percent to about 8 wt. percent, preferably from about 2 wt. percent to about 6 wt. percent, and most preferably about 2.5 to about 4 wt. percent of the composition.

When desired, a pigment may be included in the composition such that a color is imparted to the resulting film. As such, an amount of pigment which is appropriate to obtain the desired degree of pigmentation is included in the composition. The pigment may comprise any convenient pigment which will provide a colored resulting film, for example, titanium dioxide for a white color, calcium carbonate, magnesium silicate, and mixtures thereof. The amount of pigment, fluorescent or otherwise, when included in the present inventive composition, ranges from about 5 to about 30 wt. percent, preferably from about 5 to about 20 wt. percent, and most preferably about 10 to about 17 wt. percent of the composition.

When a pigment is included in the composition, the quantity of polymer will generally be lower, e.g., toward the lower end of the range recited previously. If a pigment is not included, the amount of polymer will generally be higher, e.g., toward the higher end of the previously recited range.

In certain applications it is desirable to provide an aqueous-based aerosol coating which is fluorescent. The "pigment" materials utilized to provide this effect are not pigments in the truest sense, but are actually particles of resin material which have a dye encapsulated within. Generally, two types of resins are utilized for the production of these fluorescent coatings, thermoset and thermoplastic resins. While thermoplastic resins have a great cost advantage over their counterparts, they are very sensitive to the presence of certain organic solvents. Specifically, these resins will decompose if they are exposed to these solvents. Thermoset resins have an advantage over their thermoplastic counterparts in this area in that they are able to withstand the presence of many different types of solvents.

The present invention has overcome the aforementioned deficiencies by providing an optional, modified composition which will allow the use of the relatively inexpensive fluorescent thermoplastic pigments notwithstanding the presence of solvents in the composition. More specifically, this modified composition includes an associative thickener which actually serves to alter the rheology of the composition. This thickener dramatically improves the stability and suspension of the florescent pigments, as well as the normal type of pigments, in the composition. An example of a suitable thickener is Troythix LLBA (Troy Chemical, proprietary polymer) although any thickener which possesses the aforementioned characteristics may be used such as polyethanes, polyacrylates, and mixtures thereof. Generally, the amount of thickener used will be that amount which allows the thermoplastic pigment to remain substantially unaltered and assist in the adequate dispersion of these resins throughout the composition while the composition is in the containment means. This amount ranges from about 1 wt. percent to about 8 wt. percent, preferably from about 1 wt. percent to about 5 wt. percent, and most preferably about 2 to about 4 wt. percent of the composition.

Other thickeners may also be employed such as natural or synthetic gums, e.g., xanthan gum, starch, and mixtures thereof. These components are usually present in an amount ranging from about 0.05 to about 0.5 wt. percent, preferably about 0.05 to 0.3 wt. percent, and most preferably about 0.05 to about 0.15 wt. percent of the composition.

The inclusion of a pigment, fluorescent or otherwise, and other components in the composition will usually, but not always, require the presence of a dispersant which acts to maintain these components dispersed substantially uniformly throughout the composition. A dispersant may be needed in the present compositions even when the compositions include a surfactant such as that associated with the aforementioned "W.L." series polymer resin dispersions, this depending upon the other components present. Although any dispersant or mixture of dispersants that operates to adequately disperse the pigment and other optional components may be used such as anionic, nonionic, cationic, and amphoteric dispersants, Nalco 2395 (Nalco Chemical), which consists of ethoxylated castrol oil, is preferred. The amount of dispersant may range from about 0.1 to about 2 wt. percent, preferably from about 0.2 to about 1 wt. percent, and most preferably about 0.5 to about 0.8 wt. percent of the composition. The amount of dispersant, however, depends to some extent on its flammability. If the dispersant selected is flammable, the quantity should be limited such that the total amount does not inhibit the non-flammability of the composition.

An anti-foam or defoaming composition may be optionally employed during the production of the composition to aid in its manufacture. Specifically, this additive alters the surface tension of the composition such that foaming of the composition during processing is minimized. This agent also counters the detergent effects of the surfactants that are present in the composition. Generally, any known defoamer may be used, with non-ionic blends of mineral oils and silica derivatives being preferred. Particularly preferred is Troysol D-55 (Troy Chemical) which consists of a hydrophobic inorganic substance in oil. Other defoaming compositions may contain silicones, non-silicones, inorganic or organic materials, and mixtures of these which have the requisite effect during processing. While the defoaming agent is generally used in an amount sufficient to prevent foaming of the composition upon discharge, quantities ranging from about 0.1 to about 1 wt. percent, preferably about 0.1 wt. percent to about 0.5 wt. percent, and most preferably about 0.1 to about 0.3 wt. percent of the composition are typically employed.

The composition also advantageously contains a "flash corrosion" inhibitor which acts to prevent, or at least significantly reduce, corrosion of metal surfaces with which the composition comes in contact. Although any available inhibitor may be used, sodium nitrite has been found to be particularly effective in the present composition. Generally, a corrosion inhibiting amount of the inhibitor will be introduced into the composition, this amount ranging from about 0.05 to about 3 wt. percent of the composition. Preferably, the component is present in an amount ranging from about 0.1 wt. percent to about 1 wt. percent of the composition, and most preferably about 0.1 to about 0.3 wt. percent of the composition.

Eliminating corrosion of the inside of aerosol cans is also a concern with aerosol compositions. One method of eliminating or reducing such corrosion is to provide the composition with an overall pH value in the range of from about 7.2 to about 10 by introducing a suitable stabilizing component, such as ammonia or morpholine, in the composition in a corrosion inhibiting amount, generally up to about 1 wt. percent of the composition. This effect may also be provided with a component such as Raybo 60 (Raybo Chemical Company) which consists of an alkyl amine. Other suitable inhibitors include amines, nitroparaffins, nitrites, and mixtures thereof. This type of component inhibits can corrosion and is usually present in a corrosion inhibiting amount, generally from about 0.1 to about 3 wt. percent and preferably from about 0.5 to about 1.5 wt. percent of the composition. Most preferably, the corrosion inhibitor is about 0.5 to about 1 wt. percent of the composition.

An additional optional component is a plasticizer which operates to promote flexibility of the resulting film. The precise plasticizer used is not critical, and any such convenient compound can be successfully incorporated into the composition. Examples of preferred components are the phthalates, such as dibutyl phthalate and dioctyl phthalate. The quantity of plasticizer used in the composition is that required to provide a desired degree of flexibility. Generally, this amount ranges from about 0.1 to about 3 wt. percent, preferably from about 0.5 wt. percent to about 2 wt. percent, and most preferably about 0.7 to about 1.5 wt. percent of the composition.

A "slip agent" may also be added to the present composition, this additive increasing the abrasion resistance of the resulting polymer film. While many types of slip agents are available, any which a non-reactive with the composition may be advantageously employed. Slip agents which are preferred include those comprising silicone derivatives, e.g. silicone glycol, waxes, soaps, oils, and mixtures thereof. One particular agent used in the present invention is DC No. 14 (Dow Corning) which is approximately 10 wt. percent silicone glycol and 90 wt. percent isopropyl alcohol. Generally, these agents may be present in any amount which does not affect the non-flammability of the composition. This amount typically ranges from about 0.1 to about 2 wt. percent, preferably from about 0.1 to about 0.5 wt. percent, and most preferably about 0.1 to about 0.3 wt. percent.

A leveling agent may also be incorporated into the composition. This component is similar to a defoaming agent in at least one respect, i.e., it assists in decreasing the foaming of the composition. While any of a number of leveling agents are available, those which are non-reactive with the composition are preferred. Suitable leveling agents include non-ionic, ionic, cationic, and amphoteric surfactants which are dispersible in water. Exemplar of the type of leveling agent contemplated is Troysol LAC (Troy Chemical). Although this component may be introduced in any amount which is sufficient to produce a uniform film, it is generally present in an amount ranging from about 0.05 to about 1 wt. percent, preferably from about 0.05 to about 0.5 wt. percent, and most preferably about 0.05 to about 0.2 wt. percent of the composition.

## EXAMPLES

### Example 1

This example illustrates an orange fluorescent aerosol paint composition of the present invention.

|  | Percent (wt.) coating | Percent (wt.) aerosol |
|---|---|---|
| Rhoplex W.L. 91 dispersion | 11.53 | 9.22 |
| Water | 54.64 | 43.71 |
| n-butyl alcohol | 7.73 | 6.18 |
| Ethylene glycol monobutyl ether | 5.19 | 4.15 |
| Fluorescent pigment | 18.45 | 14.76 |
| Nalco 2395 dispersant | .92 | .74 |
| Sodium nitrate | .23 | .18 |
| Xanthan gum | .12 | .10 |
| Raybo 60 | 1.07 | .86 |
| Troysol LAC | .12 | .10 |
| Propane and butane mixture | --- | 20.00 |
| Total | 100.00 | 100.00 |

This composition was produced by adding to water, the amount of water consisting of 28 wt. percent of the coating: sodium nitrite, Nalco 2395 dispersant, butanol, and fluorescent pigment. These components were then dispersed at high speed for approximately 15 to 20 minutes after which the remaining water was added in addition to the Rhoplex WL-91 emulsion, Raybo 60, ethylene glycol monobutyl ether, and Troysol LAC. The Xanthan gum was also sifted in slowly to avoid producing lumps. The entire composition was then mixed for 20 to 30 minutes to provide the coating.

After mixing, the coating composition and the propane-butane propellant mixture were placed into an aerosol dispenser and subjected to the "Flame Projection Test." This composition was found to be non-flammable according to CSMA standards.

### Example 2

This example illustrates a white aerosol paint composition of the present invention.

|  | Percent (wt.) coating | Percent (wt.) aerosol |
|---|---|---|
| Rhoplex W.L. 91 dispersion | 12.46 | 9.97 |
| Water | 47.47 | 37.99 |
| n-butyl alcohol | 5.39 | 4.31 |
| Ethanol | 1.99 | 1.59 |
| Dibutyl phthalate | 1.30 | 1.04 |
| Propylene glycol monomethyl ether | .75 | .60 |
| Ethylene glycol monobutyl ether | 2.99 | 2.39 |
| Titanium dioxide | 14.96 | 11.97 |
| Calcium carbonate | 4.99 | 3.99 |
| Magnesium silicate | 4.99 | 3.99 |
| Nalco 2395 dispersant | .88 | .70 |
| Sodium nitrate | .20 | .16 |
| Raybo 60 corrosion inhibitor | .93 | .86 |
| Troysol LAC leveling agent | .10 | .08 |
| Triton CF-10 surfactant | .10 | .08 |
| Troysol D-55 defoamer | .20 | .16 |
| DC-14 silicone slip agent | .30 | .24 |
| Propane and butane mixture | --- | 20.00 |
| Total | 100.00 | 100.00 |

This composition was produced by adding to water, the amount of water consisting of 22 wt. percent of the coating: sodium nitrite, Nalco 2395 dispersant, Troysol D-55, Triton CF-10, titanium dioxide, magnesium silicate, and calcium carbonate. These components were then dispersed at high speed for approximately 15 to 20 minutes after which the remaining water was added in addition to the Rhoplex WL-91 emulsion, Raybo 60, ethylene glycol monobutyl ether, butanol, ethanol, dibutyl phthalate, propylene glycol monomethyl ether, DC 14, and Troysol LAC. The entire composition was then mixed for 20 to 30 minutes to provide the coating.

After mixing, the coating composition and the propane-butane propellant mixture were placed into an aerosol dispenser and subjected to the "Flame Projection Test." This composition was found to be nonflammable according to CSMA standards.

**Example 3**

This example illustrates another orange fluorescent aerosol paint composition of the present invention containing a fluorescent thermoplastic resin.

| | Percent (wt.) coating | Percent (wt.) aerosol |
|---|---|---|
| Rhoplex W.L. 91 dispersion | 10.5 | 8.4 |
| Water | 46.1 | 36.9 |
| n-butyl alcohol | 5.0 | 4.0 |
| Butyl Cellosolve | 3.2 | 2.6 |
| Fluorescent pigment | 10.5 | 8.4 |
| Magnesium silicate | 7.9 | 6.3 |
| Calcium carbonate | 7.9 | 6.3 |
| Sodium nitrite | 2.1 | 1.7 |
| Raybo 60 inhibitor | 1.0 | 0.8 |
| Nalco 2395 dispersant | 0.8 | 0.6 |
| DC-14 silicone slip agent | 0.3 | 0.2 |
| Troythix LLBA associative thickener | 4.7 | 3.8 |
| Propane and butane mixture | --- | 20.0 |
| Total | 100.0 | 100.0 |

This composition was produced by adding to water, the amount of water consisting of 24 wt. percent of the coating: sodium nitrite, butanol, fluorescent pigment, Troythix LLBA, magnesium silicate, and calcium carbonate. These components were then dispersed at high speed for approximately 15 to 20 minutes after which the remaining water was added in addition to the Rhoplex WL-91 emulsion, Raybo 60, butanol, butyl cellosolve, and DC 14. The entire composition was then mixed for 20 to 30 minutes to provide the coating.

After mixing, the coating composition and the propane-butane propellant mixture were placed into an aerosol dispenser and subjected to the "Flame Projection Test." This composition was found to be non-flammable according to CSMA standards.

**Example 4**

This example illustrates a white aerosol paint composition of the present invention.

10

|  | Percent (wt.) coating | Percent (wt.) aerosol |
|---|---|---|
| Rhoplex W.L. 91 dispersion | 11.1 | 8.9 |
| Water | 47.6 | 38.1 |
| n-butyl alcohol | 4.6 | 3.7 |
| Butyl Cellosolve | 2.9 | 2.3 |
| Propylene glycol monomethyl ether | 0.7 | 0.6 |
| Magnesium silicate | 7.3 | 5.8 |
| Calcium carbonate | 7.3 | 5.8 |
| Titanium dioxide | 12.2 | 9.8 |
| Dibutyl phthalate | 1.3 | 1.0 |
| Sodium nitrite | 0.2 | 0.2 |
| Raybo 60 corrosion inhibitor | 0.9 | 0.7 |
| Nalco 2395 dispersant | 0.8 | 0.6 |
| DC-14 silicone slip agent | 0.3 | 0.2 |
| Troysol D-55 defoamer | 0.2 | 0.2 |
| Troythix LLBA associative thickener | 2.6 | 2.1 |
| Propane and butane mixture | --- | 20.0 |
| Total | 100.0 | 100.0 |

This composition was produced by adding to water, the amount of water consisting of 22 wt. percent of the coating: sodium nitrite, Nalco 2395 dispersant, Troysol D-55, Troythix LLBA, titanium dioxide, magnesium silicate, and calcium carbonate. These components were then dispersed at high speed for approximately 15 to 20 minutes after which the remaining water was added in addition to the Rhoplex WL-91 emulsion, Raybo 60, butanol, dibutyl phthalate, propylene glycol monomethyl ether, DC 14, and butyl cellosolve. The entire composition was then mixed for 20 to 30 minutes to provide the coating.

After mixing, the coating composition and the propane-butane propellant mixture were placed into an aerosol dispenser and subjected to the "Flame Projection Test." This composition was found to be non-flammable according to CSMA standards.

**Comparative Example A**

An aerosol composition according to Example 2 of U.S. Patent No. 4,265,797 was prepared and packaged in an aerosol can.

|  | Percent (wt.) aerosol |
|---|---|
| Rhoplex W.L. 91 emulsified resin | 24.90 |
| Water | 18.00 |
| Isopropanol (18%) | 25.00 |
| Tamol 731 | 0.50 |
| Butyl Cellosolve | 5.00 |
| Byk 301 | 0.15 |
| L475 | 0.30 |
| 5% ammonia solution | 0.15 |
| Dioctyl phthalate | 1.00 |
| Dimethyl ether propellant | 25.00 |
| Total | 100.00 |

This composition was subjected to the "Flame Projection Test" and was found to be flammable according to CSMA standards.

**Comparative Example B**

The aerosol composition of Comparative Example A was prepared except that a hydrocarbon propellant, a mixture of propane and butane, was substituted for the dimethyl ether component. When the actuator was depressed, the composition did not produce a continuous film. More specifically, the composition foamed upon discharge and subsequently cratered and crawled. Further, after this composition was subjected to the "Flame Projection Test," it was found to be flammable according to CSMA standards.

The following pages 23 to 29 of the description show the general prefered embodiments of the inventions.

1. An aerosol composition adapted for providing a continuous film on a substrate upon discharge from a suitable containment means, said composition comprising (a) about 10 to about 30 wt. percent of at least one propellant, (b) about 20 to about 80 wt. percent of water, (c) about 2 to about 25 wt. percent of a water-insoluble film-forming polymer, and (d) about 0.1 to about 10 wt. percent of at least one surfactant, said composition being substantially non-flammable upon discharge from the containment means.

2. The aerosol composition of embodiment 1, wherein said liquid propellant is immiscible with water.

3. The aerosol composition of embodiment 2, wherein said liquid propellant comprises at least one hydrocarbon.

4. The aerosol composition of embodiment 3, wherein said propellant is present in an amount ranging from about 15 to about 25 wt. percent of said composition.

5. The aerosol composition of embodiment 4, wherein said liquid propellant is selected from the group consisting of methane, ethane, propane, butane, isobutane, and mixtures thereof.

6. The aerosol composition of embodiment 1, further comprising at least one solvent which is adapted from coalescing said water-insoluble polymer after said composition has been discharged from the containment means.

7. The aerosol composition of embodiment 6, wherein said solvent is present in an amount which is sufficient to coalesce said water-insoluble polymer after said composition has been discharged from the containment means such that a smooth continuous film is produced.

8. The aerosol composition of embodiment 6, wherein said solvent is present in an amount ranging from about 1 wt. percent to about 8 wt. percent of the composition.

9. The aerosol composition of embodiment 8, wherein said solvent is selected from the group consisting of lower monoalkyl ethers of ethylene, lower monoalkyl ethers of propylene, and mixtures thereof.

10. The aerosol composition of embodiment 9, wherein said solvent is selected from the group consisting of ethylene glycol monobutyl ether, propylene glycol monomethyl ether, and mixtures thereof.

11. The aerosol composition of embodiment 6, wherein said water-insoluble polymer is adapted for remaining in a non-coalesced condition during the time said polymer resides in the containment means despite there being present an amount of solvent in excess of the minimum amount required to form a smooth and continuous film on a substrate from said polymer.

12. The aerosol composition of embodiment 1, wherein said water-insoluble polymer is an acrylic polymer.

13. The aerosol composition of embodiment 12, wherein said polymer comprises an interpolymer of (i) units from at least one neutral free-radical polymerizable ester having a vinylidene group attached to the functional group, which ester by itself yields a soft linear polymer, (ii) units from at least one neutral polymerizable aromatic monovinylidene compound which by itself yields a hard polymer, and (iii) units from at least one neutral polymerizable aliphatic monovinylidene compound substituted by a cyano group and which by itself yields a hard polymer.

14. the aerosol composition of embodiment 13, wherein said polymer is a copolymer of styrene, acrylonitrile, and an acrylic ester.

15. The aerosol composition of embodiment 13, wherein said polymer is present in an amount ranging from about 5 wt. percent to about 15 wt. percent of said composition.

16. The aerosol composition of embodiment 1, wherein said surfactant is selected from the group consisting of alkylaryl polyethers.

17. An aerosol composition adapted for providing a continuous film on a substrate upon discharge from a suitable containment means, said composition comprising (a) about 15 to about 25 wt. percent of at least one propellant, (b) about 30 to about 60 wt. percent of water, (c) about 2 to about 15 wt. percent of a water-insoluble film-forming polymer, and (d) about 0.5 to about 5 wt. percent of at least one surfactant, said composition being substantially non-flammable upon discharge from the containment means.

18. The aerosol composition of embodiment 1, further comprising a pigment.

19. The aerosol composition of embodiment 18, wherein said pigment is present in an amount ranging form about 5 wt. percent to about 30 wt. percent of said composition.

20. The aerosol composition of embodiment 19, wherein said pigments are selected from the group consisting of calcium carbonate, magnesium silicate, and titanium dioxide.

21. The aerosol composition of embodiment 1, further comprising an associative thickener.

22. the aerosol composition of embodiment 21, further comprising a fluorescent pigment.

23. The aerosol composition of embodiment 22, wherein said fluorescent pigment is a thermoplastic fluorescent pigment.

24. The aerosol composition of embodiment 22, wherein said fluorescent pigment is present in an amount ranging from about 5 to about 30 wt. percent of the solution.

25. The aerosol composition of embodiment 21, wherein said associative thickener is present in an amount ranging from about 1 wt. percent to about 8 wt. percent of said composition.

26. The aerosol composition of embodiment 22, wherein said associative thickener is present in an amount sufficient to disperse the fluorescent pigment substantially uniformly throughout the composition.

27. The aerosol composition of embodiment 26, wherein said associative thickener is selected from the group consisting of polyethanes, polyacrylates, and mixtures thereof.

28. The aerosol composition of embodiment 1, further comprising a defoaming composition.

29. The aerosol composition of embodiment 28, wherein said defoaming composition is present in an amount sufficient to substantially eliminate any foaming of said composition upon discharge from the containment means.

30. The aerosol composition of embodiment 28, wherein said defoaming composition is represent in an amount ranging from about 0.1 wt. percent to about 1 wt. percent of said composition.

31. The aerosol composition of embodiment 28, wherein said defoaming composition is selected from the group consisting of silicones.

32. The aerosol composition of embodiment 1, further comprising an alcohol.

33. The aerosol composition of embodiment 32, wherein said alcohol is present in an amount ranging from about 2 wt. percent to about 10 wt. percent of said composition.

34. The aerosol composition of embodiment 33, wherein said alcohol is selected from the group consisting of methanol, ethanol, propanol, butanol, isobutanol, and mixtures thereof.

35. The aerosol composition of embodiment 1, further comprising a flash corrosion inhibitor.

36. The aerosol composition of embodiment 35, wherein said flash corrosion inhibitor is represent in a flash corrosion inhibiting amount.

37. The aerosol composition of embodiment 35, wherein said flash corrosion inhibitor is present in an amount ranging from about 0.05 wt. percent to about 3 wt. percent of said composition.

38. The aerosol composition of embodiment 37, wherein said flash corrosion inhibitor is sodium nitrite.

39. The aerosol composition of embodiment 1, further comprising an aerosol can corrosion inhibitor.

40. The aerosol composition of embodiment 39, wherein said aerosol can corrosion inhibitor is present in a corrosion inhibiting amount.

41. The aerosol composition of embodiment 39, wherein said aerosol can corrosion inhibitor is present in an amount ranging from about 0.1 wt. percent to about 3 wt. percent of said composition.

42. The aerosol composition of embodiment 41, wherein said aerosol can corrosion inhibitor is selected from the group consisting of amines, nitroparaffins, nitrites, and mixtures thereof.

43. The aerosol composition of embodiment 1, further comprising a leveling agent.

44. The aerosol composition of embodiment 43, wherein said leveling agent is present in an amount ranging from about 0.05 wt. percent to about 1 wt. percent of said composition.

45. The aerosol composition of embodiment 44, wherein said leveling agent is selected from the group consisting of anionic agents, non-ionic agents, cationic agents, amphoteric agents, and mixtures thereof.

46. The aerosol composition of embodiment 1, further comprising a dispersant.

47. The aerosol composition of embodiment 46, wherein said dispersant is present in an amount ranging from about 0.1 wt. percent to about 2 wt. percent of said composition.

48. The aerosol composition of embodiment 47, wherein said dispersant is selected from the group consisting of anionic agents, non-ionic agents, cationic agents, amphoteric agents, and mixtures thereof.

49. The aerosol composition of embodiment 1, further comprising a slip agent.

50. The aerosol composition of embodiment 49, wherein said slip agent is represent in an amount ranging from about 0.1 wt. percent to about 2 wt. percent of said composition.

51. The aerosol composition of embodiment 50, wherein said slip agent is selected from the group consisting of silicones, waxes, soaps, oils, and mixtures thereof.

13

52. The aerosol composition of embodiment 1, further comprising a plasticizer.

53. The aerosol composition of embodiment 52, wherein said plasticizer is present in an amount ranging from about 0.1 wt. percent to about 3 wt. percent of said composition.

54. The aerosol composition of embodiment 53, wherein said plasticizer is a phthalate.

55. The aerosol composition of embodiment 1, further comprising a thickener.

56. The aerosol composition of embodiment 55, wherein said thickener is present in an amount ranging from about 0.05 wt. percent to about 0.5 wt. percent of said composition.

57. The aerosol composition of embodiment 57, wherein said thickener is selected from the group consisting of natural gums, synthetic guns, starch, and mixtures thereof.

58. an aerosol composition adapted for providing a continuous film on a substrate upon discharge from a suitable containment means, said composition comprising (a) about 18 to about 22 wt. percent of at least one propellant, (b) about 35 to about 45 wt. percent of water, (c) about 3 to about 8 wt. percent of a water-insoluble film-forming polymer, and (d) about 1 to about 3 wt. percent of at least one surfactant, said composition being substantially non-flammable upon discharge from the containment means.

**Claims**

1. An aerosol composition adapted for providing a continuous film on a substrate upon discharge from a suitable containment means, said composition comprising (a) about 10 to about 30 wt. percent of at least one propellant, (b) about 20 to about 80 wt. percent of water, (c) about 2 to about 25 wt. percent of a water-insoluble film-forming polymer, and (d) about 0.1 to about 10 wt. percent of at least one surfactant, said composition being substantially non-flammable upon discharge from the containment means.

2. The aerosol composition of embodiment 1, further comprising at least one solvent which is adapted for coalescing said water-insoluble polymer after said composition has been discharged from the containment means.

3. The aerosol composition of embodiment 1, further comprising a pigment.

4. The aerosol compostion of embodiment 1, further comprising an associative thickener.

5. The aerosol composition of embodiment 4, further comprising a fluorescent pigment.

6. The aerosol composition of embodiment 1, further comprising a defoaming composition.

7. The aerosol composition of embodiment 1, further comprising an alcohol.

8. The aerosol composition of embodiment 1, further comprising a flash corrosion inhibitor.

9. The aerosol composition of embodiment 1, further comprising an aerosol can corrosion inhibitor.

10. The aerosol composition of embodiment 1, further comprising a leveling agent.

11. The aerosol composition of embodiment 1, further comprising a dispersant.

12. The aerosol composition of embodiment 1, further comprising a slip agent.

13. The aerosol composition of embodiment 1, further comprising a plasticizer.

14. The aerosol composition of embodiment 1, further comprising a thickener.